# EUROPEAN PATENT SPECIFICATION

(11) **EP 1 982 934 B1**
(45) Date of publication and mention of the grant of the patent: **07.09.2011**
(21) Application number: 07251646.1
(22) Date of filing: 19.04.2007
(51) Int. Cl.: B65D 88/54, B65G 65/48, B65D 88/14

(54) **Dry ice bulk transporter**
Schüttguttransporter für Trockeneis-Pellets
Transporteur de glace carbonique en vrac

(43) Date of publication of application: 22.10.2008
(73) Proprietor: YARA International ASA, 0202 Oslo (NO)
(72) Inventor: Nielsen, Arvid, 1560 Hoeilaart (BE); Hansen, Kai, 7000 Fredericia (DK)
(74) Representative: Onsagers AS

(56) References cited:
- DE-A1- 2 811 584
- DE-A1-102005 004 245
- FR-A1- 2 270 322
- FR-A1- 2 375 325
- US-A- 5 503 198

## Description

### FIELD OF INVENTION

The present invention relates to a device for transportation of pellets. The invention is especially provided for the transportation of dry ice pellets, but it would also be suitable for the transportation of substances with similar characteristics, for example other substances in solid form.

### BACKGROUND OF THE INVENTION

Dry ice is a common term used for describing carbon dioxide in solid form (CO₂ cooled down to temperatures below approximately - 79°C). Dry ice has many industrial applications, such as a refrigerant for the food industry, transport of goods etc. Dry ice is normally transported in the form of pellets.

Today, the dry ice pellets for industrial purposes are transported on trucks in insulated containers of standard sizes of 100 - 500 liters. The containers are today transported as general "cargo" together with other types of goods, and are loaded to and unloaded from the truck by means of forklifts etc.

One problem with dry ice pellets is that during storage and transportation, the pellets will bridge or bind to each other, which makes it difficult to empty containers filled with dry ice pellets.

The object of the present invention is to provide an improved device for transportation of pellets and especially dry ice pellets. The main object is to provide a device for transportation of dry ice where larger amounts of dry ice can be handled and distributed in an efficient and easy way, where the bridging of the pellets is avoided. Consequently it is an object of the invention to reduce costs, fuel consumption and product losses (sublimation of the dry ice) etc. related to the transportation of dry ice.

Transport devices are known from at least DE2811584, FR2375325 and FR2270322. The features of the rpesent invention that are known from DE2811584 have been placed in the preamble of claim 1 appended hereto.

### SUMMARY OF THE INVENTION

The present invention relates to a transport device as defined in claim 1. It comprises a supporting device and a container device.

The container device comprises a substantially cylindrical container with at least one opening for filling and unloading the container and an internal feeding screw for moving the pellets inside the container.

The supporting device comprises a first bearing arrangement for rotatably supporting a first end of the container device and a second bearing arrangement for rotatably supporting a second end of the container device.

The second bearing arrangement comprises a driving means for rotating the container device in relation to the supporting device .

The first bearing arrangement can be any means able to rotatably support the container device. The first and second bearing arrangement can support the periphery of the substantially cylindrical container device near its respective ends or by means of supporting flanges, as described below.

In a preferred embodiment, the first bearing arrangement comprises two spaced apart first supporting means for rotatably supporting a first flange fixed to the first end of the container device .

The second bearing arrangement comprises two spaced apart second supporting means for rotatably supporting a second flange fixed to the second end of the container device.

The supporting means comprises rotatable supporting wheels. It would also be possible to use a rotatable supporting wheel and a slide bearing at the first bearing arrangement.

The driving means comprises a gear wheel engaged with an internal gear fixed to the second end of the container.

In another preferred embodiment, the feeding screw is fixed along its periphery to the inner wall of the container.

In another preferred embodiment, the feeding screw has a height approximately equal to 5 - 30 % of the maximum diameter d_{c} of the container.

In another preferred embodiment, the diameter inside the container decreases towards the at least one opening in the container, thereby forming a conical part.

In another preferred embodiment, the diameter of the feeding screw decreases corresponding to the diameter inside the container.

In another preferred embodiment, the height of the feeding screw is increased towards the opening of the container.

In another preferred embodiment, a second feeding screw is provided in the conical part, horizontally displaced in relation to the first feeding screw.

In another preferred embodiment, the supporting device comprises a frame adapted for being handled by a suitable means of transportation.

In another preferred embodiment, the pellets are dry ice pellets.

In another preferred embodiment, the at least one opening in the container comprises an outlet opening in the first end of the container for unloading the container.

In another preferred embodiment, the at least one opening in the container further comprises an inlet opening for filling the container.

### DETAILED DESCRIPTION

A preferred embodiment of the invention will now be described in detail with reference to the enclosed drawings, wherein:
Fig. 1 shows a cross sectional side view of the transport device;
Fig. 2a shows a front perspective view of the transport device;
Fig. 2b shows a back perspective view of the transport device;
Fig. 3 illustrates the feeding screw inside the container device;
Fig. 4 shows the supporting device;
Fig. 4A shows details of the front side of the supporting device of fig. 4;
Fig. 4B shows details of the rear side of the supporting device;
Fig. 5A shows a cross sectional view of the container device along line A-A in fig. 5B;
Fig. 5B shows the container device from the side;
Fig. 5C shows a cross sectional view of the container device along line B-B in fig. 5B;

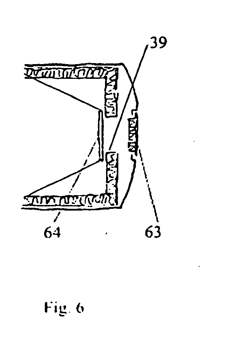

Fig. 6 illustrates an alternative embodiment where the outlet of the container is adapted to be connected to a hose;
Figs. 7a - c illustrate alternative arrangements; and
Fig. 8 shows a cross sectional view of the container device, which illustrates an alternative embodiment of the feeding screw.

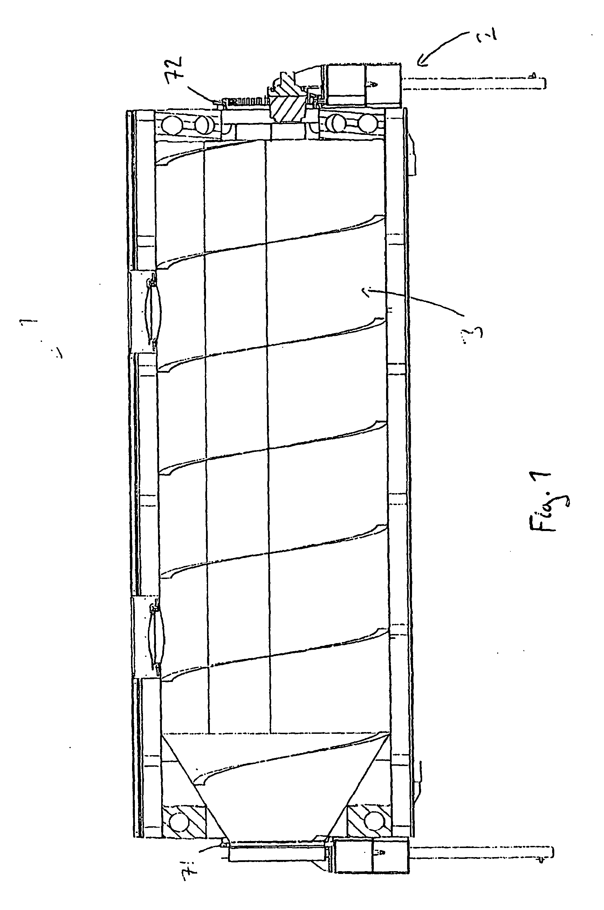

An embodiment of a transport device 1 for transportation of dry ice pellets is shown in fig. 1. The transport device 1 comprises a supporting device 2 and a container device 3.

In the following description, the term "front" side is denoting the side of the transport device which comprises the discharge opening for dry ice. The term "rear" side is denoting the opposite side of the front side.

The transport device 1 has a standard transportation size, for example an ISO container of 20 or 40 feet or other preferred dimension suitable for transportation.

The supporting device 2 is a suitable chassis or frame for being handled by and fastened to a respective means of transportation (such as trucks, ships, trains, forklifts, cranes etc).

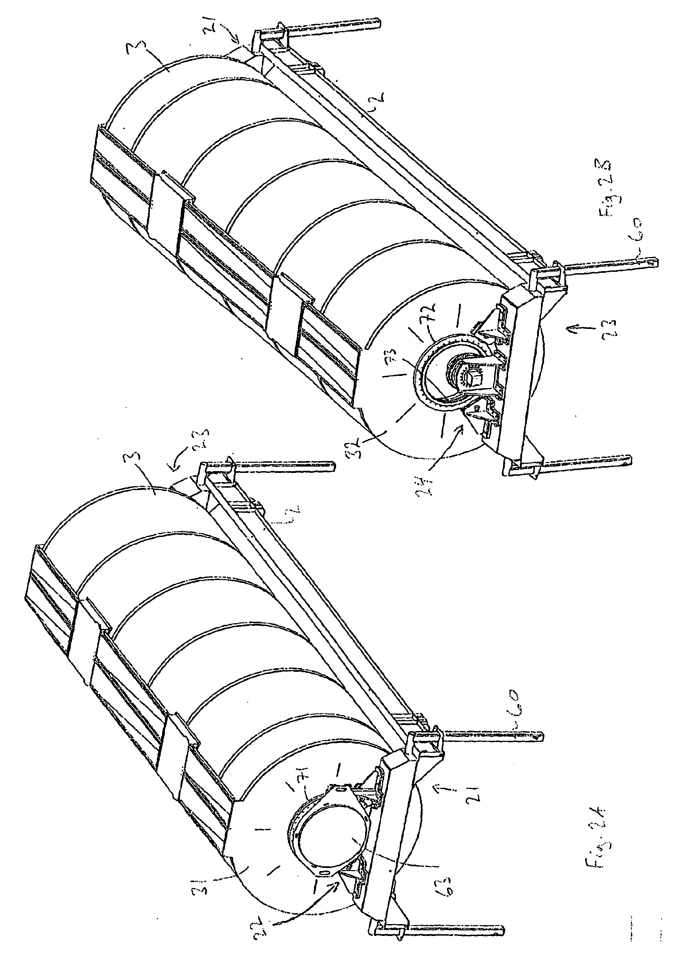

With reference to figs. 2a and 2b at a first front end 21 of the transport device 1 the supporting device 2 comprises a first bearing arrangement 22 for supporting a first end 31 of the container device 3. At a second rear end 23 of the transport device 1 the supporting device 2 comprises a second bearing arrangement 24 for supporting a second end 32 of the container device 3.

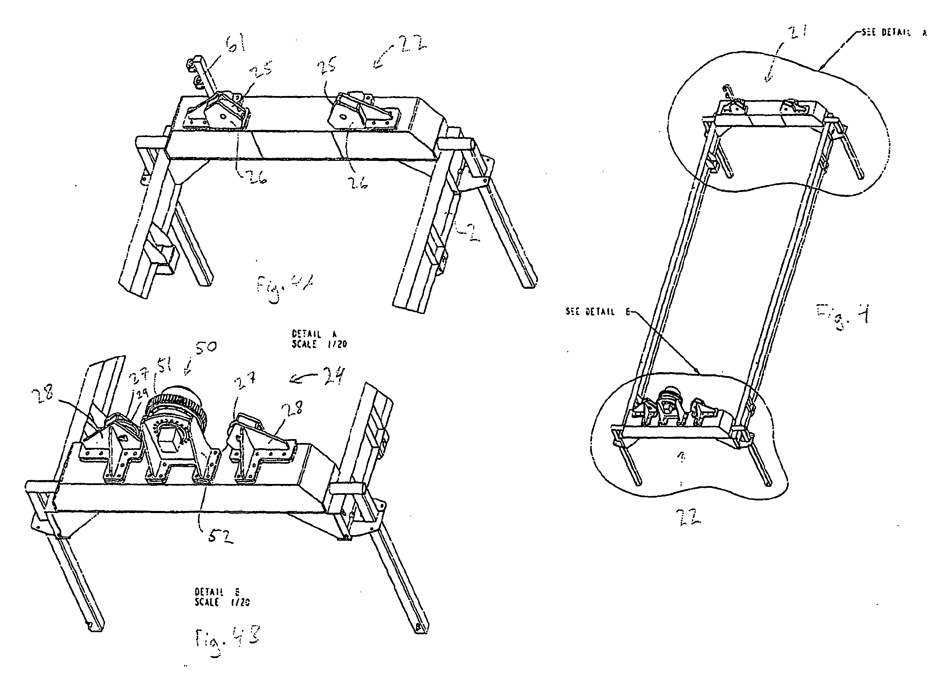

The components of the first and second bearing arrangements 22, 24 being fastened to the supporting device 2 will now be described with reference to fig. 4, 4A and 4B.

The first bearing arrangement 22 comprises two spaced apart supporting wheels 25 each rotatably fastened to the supporting device 2 by means of a wheel holder 26.

The second bearing arrangement 24 also comprises two spaced apart supporting wheels or supporting pulleys 27 each rotatably fastened to the supporting device 2 by means of a wheel holder 28. It should be noted that the supporting wheels 27 comprises a groove 29 along its periphery.

As will be apparent from the description below, the first and second bearing arrangements 22, 24 are dimensioned to support the container device 3 fully loaded.

Moreover, the second bearing arrangement 24 comprises driving means 50. The driving means comprises a gear wheel 51 with outwardly protruding gears which are rotatably fastened to the supporting device 2 by means of a gear wheel holder 52. The gear wheel 51 is rotated by means of a power source (electrical, pneumatic, hydraulic, etc) (not shown). The driving means 50 can for example be connected to a hydraulic system of the vehicle carrying the transport device 1. Moreover, the operation of the driving means 50 can be controlled by means of a control device (not shown), for controlling the rotation direction, rotation speed etc of the container device 3.

It should be noted that the rotation axis of the gear wheel 51 is parallel to the rotation axis of the supporting wheels 25, 27, which will be apparent from the description below.

moreover, the supporting device 2 can comprise foldable supporting legs 60 for leaving the transport device on the ground at the dry ice production facility or at the dry ice consumption facility. Alternatively, the supporting device is permanently mounted on a trailer chassis or mounted in a ISO-container frame.

The supporting device 2 further comprises fastening means 61 (fig. 4a) for fastening of a hatch 63.

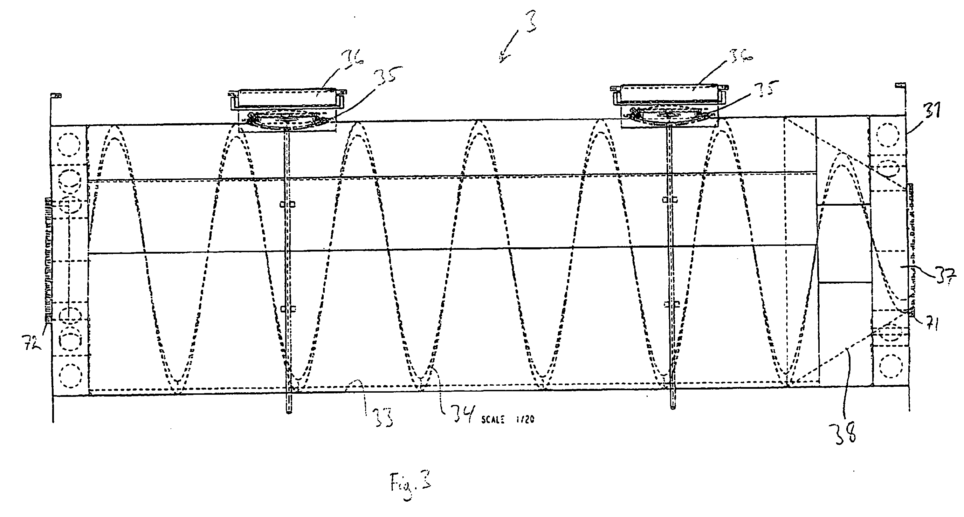

It is now referred to fig. 2a, fig. 2b and fig. 3. The container device 3 comprises a substantially cylindrical container 33 with an internal, substantially horizontal feeding screw 34.

The container 33 is insulated to reduce sublimation of the dry ice.

The container device 3 comprises inlet openings 35 on the top side for filling dry ice into the container 33. The inlet openings 35 are opened and closed by means of hatches 36.

The container device 3 comprises an outlet opening 37 for feeding dry ice out from the first end 31 of the container 33 by means of the feeding screw 34. The outlet opening 37 are opened and closed by means of the hatch 63 fastened to the supporting device 2.

In fig. 3, it is shown that the inside wall of the container 33 comprises a conical part 38 (shown with dash line) leading towards the outlet opening 37, i.e. the diameter of the cylindrical container 33 is mostly larger than the diameter of the outlet opening 37. The feeding screw 34, also shown with dash line in fig. 3, has a gradual declining diameter in the first end 31 of the container 33, adapted to the conical part 38.

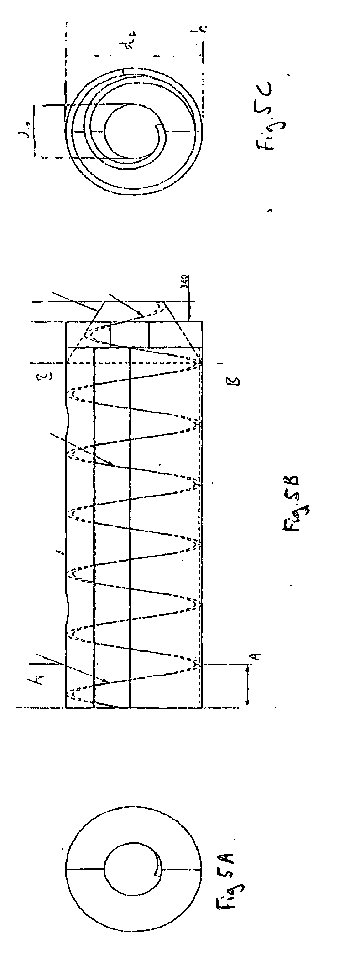

The feeding screw 34 will now be described with reference to fig. 5A, 5B and 5C. The feeding screw 34 is fixed along its periphery to the inner wall of the substantial cylindrical container 33. The feeding screw 34 has a height h approximately equal to 5 - 30 %, more preferably 5 - 10% of the maximum diameter d_{c} of the container 33. Moreover, the relationship between the diameter dₒ of the outlet opening 37 and the diameter d_{c} is approximately is approximately 0,2 - 0,5.

During testing, it has been found that a feeding screw with a height of approximately 10 cm has been successful.

The first bearing arrangement 22 further comprises a radially protruding first flange 71 (shown in fig. 2A) fixed to the first end 31 of the container device 3. The first flange 71 is supported by the support wheels 25 of the bearing arrangement 22.

The second bearing arrangement 24 also comprises a radially protruding second flange 72 (shown in fig, 2B) fixed to the second end 32 of the container device 3.

The second flange 72 is supported by the support wheels 27 of the bearing arrangement 24. It should be noted that the second flange 72 is placed in the track 29 in respective wheels 27, thereby preventing a movement of the container device in its longitudinal direction in relation to the supporting device 2.

Moreover, the second bearing arrangement 24 further comprises an internal gear 73 with gears protruding inwardly towards the central axis of the internal gear. It can be seen from fig. 2b that the second flange 72 is surrounding the internal gear 73.

It should be noted that in this embodiment of the invention, the central axis of the container device 3, the central axes of the first and second flanges 71, 72 and the central axis of the internal gear 73 coincide. The container device 3 can be rotated by means of the bearing arrangement 22, 24 in its respective ends 31, 33 due to the flanges 71, 72 being rotatably supported by the supporting wheels 25, 27.

The internal gear 73 is engaged with the gear wheel 51 of the driving means 50. Consequently, the driving means 50 provides the possibility to rotate the container device 3 in relation to the supporting device 2, since the container device 3 is only bearing on the support wheels 25 and 27 of the bearing arrangement 22, 24.

Consequently, when the container device 3 is rotated in a first (unloading) direction in relation to the supporting device 2, the feeding screw 34 will bring the dry ice pellets from the second side 32 towards the first side 31 and up the conical part 38 towards the outlet opening 37. During filling, the container device 3 can be rotated in a second (loading) direction in relation to the supporting device 2, and the feeding screw 34 will bring the dry ice pellets towards the second side 32 of the container device.

The transport device 1 further comprises locking means for locking the rotation of the container device during transport.

In a second, alternative embodiment of the invention, the feeding screw 34 is not fixed to the inside of the container 33. On the contrary, the feeding screw can be rotated in relation to the container. Here, the feeding screw 34 or several feeding screws are rotatably mounted to the first and second end of the container device 3. The dry ice pellets are transported to and from the opening of the container device by either rotating the container while the feeding screw is fixed, or by rotating the feeding screw while the container is fixed.

In a third, alternative embodiment of the invention, the outlet opening 37 can be connected to a hose by means of a connection interface 39. This is relevant for clean environments, such as when using the dry ice in food production, where it is necessary to avoid contamination of the dry ice. Corresponding measures can also be provided for at the inlet openings 35 during filling. Preferably, there are an inner lid 64 or hatch (not shown) at the outlet opening 37 behind the outlet hatch 63. Preferably, it would be possible to control the opening and closing of the inner lid from the outside of the container 33 by means of a handle, button etc activating an lid opening actuator for the lid 64. This would improve the insulation of the container 33 and also protect the area around the outlet opening 37 from dirt etc. Moreover, the outer hatch 63 can be opened without the risk of dry ice pellets falling out from the container before the hose is connected.

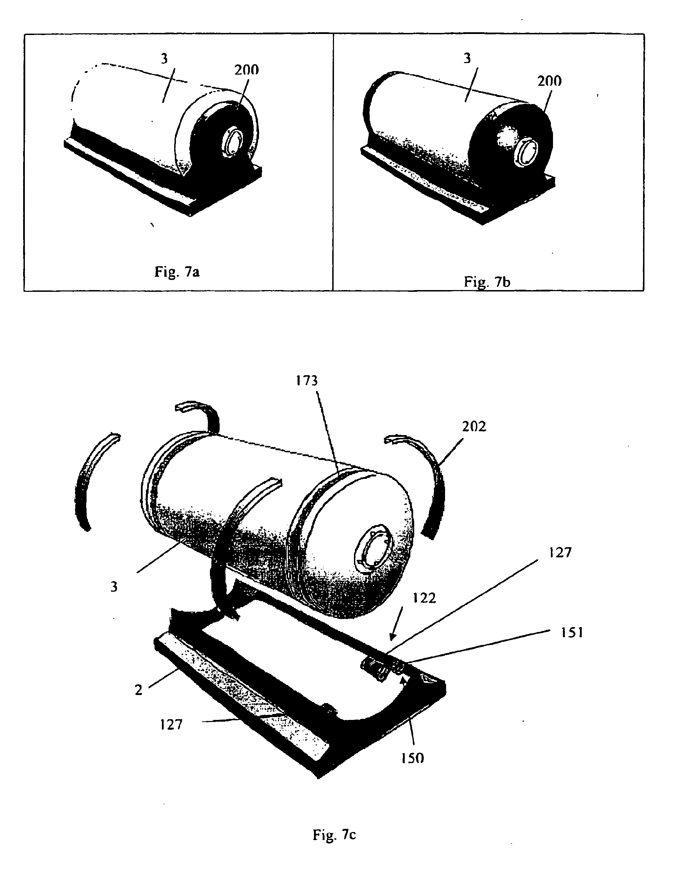

In a fourth arrangement, not in accordance with the invention, illustrated in fig. 7c, a bearing arrangement 122 comprises rollers 127 for rotatably supporting the outer surface of the container 33 in relation to the supporting device 2. The bearing arrangement 122 further comprises a driving means 150 with a gear wheel 151 which engages a gear rim 173 fixed to the outer surface of the container 33. The device 1 can comprise several such bearing arrangements 122 along the container 33. Consequently, the bearing arrangement does not have to be provided at the ends 31, 32 of the container device.

To protect the bearing arrangements, the device 1 according to the invention can be provided with covers 200 as shown in fig. 7a and 7b. The fourth alternative embodiment described above can be provided with U-shaped covers 202 to protect the gear rim 173.

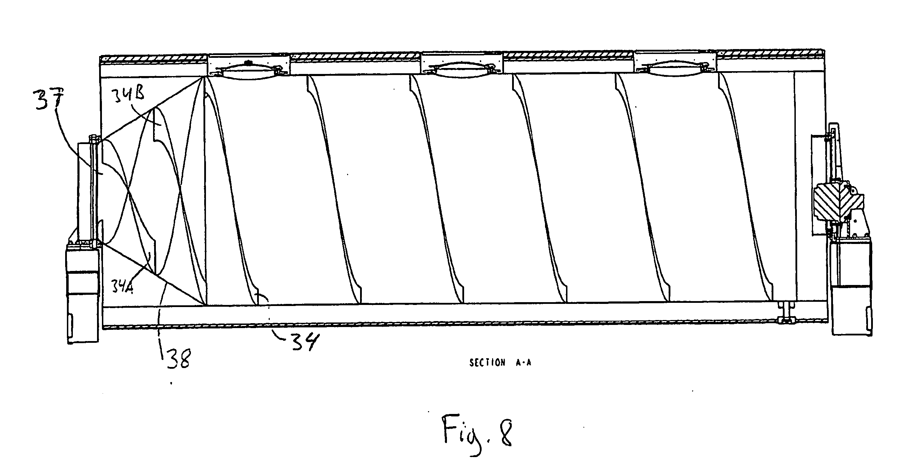

In a fifth alternative embodiment of the invention, the feeding screw 34 has an increased height in the conical part of the container 33. In fig. 5a-c described above, the height of the feeding screw 34 is about 10 cm, but in fig. 8, the height h of the feeding screw in the conical part is increasing gradually from about 10 cm in the cylindrical part of the container to about 50 cm at the outlet opening 37. Moreover, the conical part 38 of the container 34 is provided with a second feeding screw 34B, where the second feeding screw 34B is displaced horizontally in relation to the first feeding screw 34A, as shown in fig. 8. Consequently, there is a shorter distance between the threads of the feeding screw. In this way the unloading of the container is easier to control, since the sudden sliding of large amounts of pellets are reduced by the higher feeding screws having a shorter distance therebetween.

## Claims

1. A transport device for transportation of pellets, the transport device (1) comprising a supporting device (2) and a container device (3), wherein:
- the container device (3) comprises a substantially cylindrical container (33) with at least one opening for filling and unloading the container (33) and an internal feeding screw (34) for moving the pellets inside the container (33);
- the supporting device (2) comprises a first bearing arrangement (22) for rotatably supporting a first end (31) of the container device (3) and a second bearing arrangement (24) for rotatably supporting a second end (33) of the container device (3);
the second bearing arrangement (24) comprises a driving means (50) for rotating the container device (3) in relation to the supporting device (2),
- the second bearing arrangement (24) comprises two spaced apart second supporting means comprising rotatable supporting wheels (27) for rotatably supporting a second flange (72) fixed to the second end (33) of the container device (3), **characterized in that** the supporting wheels (27) comprise a groove (29) along their periphery, and where the second flange (72) is placed in the groove (29), thereby preventing a movement of the container device in its longitudinal direction is relation to the supporting device (2); and
the second bearing arrangement (24) further comprises an internal gear (73) with gears protruding inwardly towards the central axis of the internal gear (73), and that the driving means (50) comprises a gear wheel (51) engaged with the internal gear (73) fixed to the second end (33) of the container (33).

2. Transport device according to claim 1, wherein the first bearing arrangement (22) comprises two spaced apart first supporting means for rotatably supporting a first flange (71) fixed to the first end (31) of the container device (3).

3. Transport device according to claim 2, wherein the supporting means for supporting the first flange (71) comprises rotatable supporting wheels (25).

4. Transport device according to any one of the preceding claims, wherein the feeding screw (34) is fixed along its periphery to the inner wall of the container (33).

5. Transport device according to any one of the preceding claims, wherein the feeding screw (34) has a height approximately equal to 5 - 30 % of the maximum diameter d_{c} of the container (33).

6. Transport device according to any one of the preceding claims, wherein the diameter inside the container (33) decreases towards the at least one opening in the container (33), thereby forming a conical part (38).

7. Transport device according to claim 6, wherein the diameter of the feeding screw (34) decreases corresponding to the diameter inside the container (33).

8. Transport device according to claim 6 or claim 7, wherein the height of the feeding screw (34) is increased towards the opening of the container (33).

9. Transport device according to claim 6, claim 7 or claim 8, wherein a second feeding screw (34B) is provided in the conical part (38), horizontally displaced in relation to the first feeding screw (34A).

10. Transport device according to any one of the preceding claims, wherein the supporting device (2) comprises a frame adapted for being handled by a suitable means of transportation.

11. Transport device according to any one of the preceding claims, wherein the pellets are dry ice pellets.

12. Transport device according to any one of the preceding claims, wherein the at least one opening in the container (33) comprises an outlet opening (37) in the first end (31) of the container (33) for unloading the container (33).

13. Transport device according to claim 12, wherein the at least one opening in the container (33) further comprises an inlet opening (35) for filling the container (33).

## Patentansprüche

1. Transportvorrichtung zum Transportieren von Pellets, die Transportvorrichtung (1) eine Stützvorrichtung (2) und eine Behältervorrichtung (3) aufweisend, wobei:
- die Behältervorrichtung (3) einen im Wesentlichen zylindrischen Behälter (33) mit mindestens einer Öffnung zum Füllen und Entladen des Behälters (33) und eine innere Zuführschnecke (34) zum Bewegen der Pellets in dem Behälters (33) aufweist;
- die Stützvorrichtung (2) eine erste Lageranordnung (22) zum rotierbaren Lagern eines ersten Endes (31) der Behältervorrichtung (3) und eine zweite Lageranordnung (24) zum rotierbaren Lagern eines zweiten Endes (33) der Behältervorrichtung (3) aufweist;
- die zweite Lageranordnung (24) ein Antriebsmittel (50) zum Rotieren der Behältervorrichtung (3) in Bezug zu der Stützvorrichtung (2) aufweist,
- die zweite Lageranordnung (24) zwei beabstandete zweite Stützmittel aufweist, die rotierbare Stützräder (27) zum rotierbaren Stützen eines zweiten Flansches (72), der an dem zweiten Ende (33) der Behältervorrichtung (3) befestigt ist, aufweist,
**dadurch gekennzeichnet,**
**dass** die Stützräder (27) entlang ihres Umfangs eine Nut (29) aufweisen und der zweite Flansch (72) in der Nut (29) platziert ist, **dadurch** eine Bewegung der Behältervorrichtung in ihrer Längsrichtung in Bezug zu der Stützvorrichtung (2) verhindernd; und
die zweite Lageranordnung (24) des Weiteren ein Hohlrad (73) mit nach innen in Richtung der Mittelachse des Hohlrads (73) hervorstehenden Zähnen aufweist und dass die Antriebsmittel (50) ein Getrieberad (51) aufweisen, das in das Hohlrad (73), das an dem zweiten Ende (33) des Behälters (33) befestigt ist, eingreift.

2. Transportvorrichtung gemäß Anspruch 1, bei der die erste Lageranordnung (22) zwei beabstandete erste Stützmittel zum rotierbaren Lagern eines ersten Flansches (71), der an dem ersten Ende (31) der Behältervorrichtung (3) befestigt ist, aufweist.

3. Transportvorrichtung gemäß Anspruch 2, bei der die Stützmittel zum Lagern des ersten Flansches (71) rotierbare Stützräder (25) aufweisen.

4. Transportvorrichtung gemäß einem der vorstehenden Ansprüche, bei der die Zuführschnecke (34) entlang ihres Umfangs an der inneren Wand des Behälters (33) befestigt ist.

5. Transportvorrichtung gemäß einem der vorstehenden Ansprüche, bei der die Zuführschnecke (34) in etwa eine Höhe von 5 - 30 % des maximalen Durchmessers d_{c} des Behälters (33) aufweist.

6. Transportvorrichtung gemäß einem der vorstehenden Ansprüche, bei der der Durchmesser in dem Behälter (33) in Richtung der mindestens einen Öffnung in dem Behälter (33) abnimmt, **dadurch** ein konisches Teil (38) ausbildend.

7. Transportvorrichtung gemäß Anspruch 6, bei der der Durchmesser der Zuführschnecke (34) entsprechend des Durchmessers in dem Behälter (33) abnimmt.

8. Transportvorrichtung gemäß Anspruch 6 oder Anspruch 7, bei der die Höhe der Zuführschnecke (34) in Richtung der Öffnung des Behälters (33) zunimmt.

9. Transportvorrichtung gemäß Anspruch 6, Anspruch 7 oder Anspruch 8, bei der eine zweite Zuführschnecke (34B) in dem konischen Teil (38) bereitgestellt ist, die horizontal in Bezug zu der ersten Zuführschnecke (34A) versetzt ist.

10. Transportvorrichtung gemäß einem der vorstehenden Ansprüche, bei der die Stützvorrichtung (2) einen Rahmen aufweist, der für die Handhabung durch ein geeignetes Transportmittel angepasst ist.

11. Transportvorrichtung gemäß einem der vorstehenden Ansprüche, bei der die Pellets Trockeneispellets sind.

12. Transportvorrichtung gemäß einem der vorstehenden Ansprüche, bei der die mindestens eine Öffnung in dem Behälter (33) eine Auslassöffnung (37) in dem ersten Ende (31) des Behälters (33) zum Entladen des Behälters (33) aufweist.

13. Transportvorrichtung gemäß Anspruch 12, bei der die mindestens eine Öffnung in dem Behälter (33) des Weiteren eine Einlassöffnung (35) zum Füllen des Behälters (33) aufweist.

## Revendications

1. Dispositif de transport pour le transport des granules, le dispositif de transport (1) comprenant un dispositif de support (2) et un dispositif formant conteneur (3), dans lequel:
- Le dispositif formant conteneur (3) comprend un conteneur sensiblement cylindrique (33) avec au moins une ouverture pour le remplissage et le déchargement du conteneur (33) et une vis d'alimentation interne (34) pour déplacer les granules à l'intérieur du conteneur (33);
- le dispositif de support (2) comprend un premier agencement de palier (22) pour supporter de manière rotative une première extrémité (31) du dispositif formant conteneur (3) et un deuxième agencement de palier (24) pour supporter de manière rotative une deuxième extrémité (33) du dispositif formant conteneur (3);
- le deuxième agencement de palier (24) comprend les moyens d'entraînement (50) pour faire tourner le dispositif formant conteneur (3) par rapport au dispositif de support (2),
- le deuxième agencement de palier (24) comprend deux deuxièmes moyens de support espacés comprenant des roues de support rotatives (27) pour supporter de manière rotative un deuxième rebord (72) fixé sur la deuxième extrémité (33) du dispositif formant conteneur (3), **caractérisé en ce que** les roues de support (27) comprennent une rainure (29) le long de leur périphérie, et où le deuxième rebord (72) est placé dans la rainure (29), empêchant ainsi un mouvement du dispositif formant conteneur dans sa direction longitudinale par rapport au dispositif de support (2); et
le deuxième agencement de palier (24) comprend en outre un engrenage interne (73) avec des engrenages qui font saillie vers l'intérieur vers l'axe central de l'engrenage interne (73), et **en ce que** les moyens d'entraînement (50) comprennent une roue d'engrenage (51) mise en prise avec l'engrenage interne (73) fixé sur la deuxième extrémité (33) du conteneur (33).

2. Dispositif de transport selon la revendication 1, dans lequel le premier agencement de palier (22) comprend deux premiers moyens de support espacés pour supporter de manière rotative un premier rebord (71) fixé sur la première extrémité (31) du dispositif formant conteneur (3).

3. Dispositif de transport selon la revendication 2, dans lequel les moyens de support pour supporter le premier rebord (71) comprennent des roues de support rotatives (25).

4. Dispositif de transport selon l'une quelconque des revendications précédentes, dans lequel la vis d'alimentation (34) est fixée le long de sa périphérie à la paroi interne du conteneur (33).

5. Dispositif de transport selon l'une quelconque des revendications précédentes, dans lequel la vis d'alimentation (34) a une hauteur approximativement égale à 5-30% du diamètre maximum d_{c} du conteneur (33).

6. Dispositif de transport selon l'une quelconque des revendications précédentes, dans lequel le diamètre à l'intérieur du conteneur (33) diminue vers la -au moins- une ouverture dans le conteneur (33), formant ainsi une partie conique (38).

7. Dispositif de transport selon la revendication 6, dans lequel le diamètre de la vis d'alimentation (34) diminue en correspondant au diamètre à l'intérieur du conteneur (33).

8. Dispositif de transport selon la revendication 6 ou 7, dans lequel la hauteur de la vis d'alimentation (34) est augmentée vers l'ouverture de conteneur (33).

9. Dispositif de transport selon la revendication 6, la revendication 7 ou la revendication 8, dans lequel une deuxième vis d'alimentation (34B) est prévue dans la partie conique (38), déplacée horizontalement par rapport à la première vis d'alimentation (34A).

10. Dispositif de transport selon l'une quelconque des revendications précédentes, dans lequel le dispositif de support (2) comprend un châssis adapté pour être manipulé avec des moyens de transport appropriés.

11. Dispositif de transport selon l'une quelconque des revendications précédentes, dans lequel les granules sont des granules de neige carbonique.

12. Dispositif de transport selon l'une quelconque des revendications précédentes, dans lequel la -au moins- une ouverture dans le conteneur (33) comprend une ouverture de sortie (37) dans la première extrémité (31) du conteneur (33) pour décharger le conteneur (33).

13. Dispositif de transport selon la revendication 12, dans lequel la -au moins- une ouverture dans le conteneur (33) comprend en outre une ouverture d'entrée (35) pour remplir le conteneur (33).
